# EUROPÄISCHE PATENTSCHRIFT

(11) **EP 1 526 236 B1**
(45) Veröffentlichungstag und Bekanntmachung des Hinweises auf die Patenterteilung: **16.01.2008**
(21) Anmeldenummer: 04020365.5
(22) Anmeldetag: 27.08.2004
(51) Int. Cl.: E05B 63/20, E05B 5/02, B62D 43/10

(54) **Vorrichtung zum Verriegeln und zum Betätigen von Klappen, Türen oder dgl.**
Device for locking and operating lids, doors or the like.
Dispositif de verrouillage et d'actionnement pour couvercles, portes ou similaires

(30) Priorität: 25.10.2003 DE 10349926
(43) Veröffentlichungstag der Anmeldung: 27.04.2005
(73) Patentinhaber: Huf Hülsbeck & Fürst GmbH & Co. KG, 42551 Velbert (DE)
(72) Erfinder: Felderhoff, Rainer, 42555 Velbert (DE)
(74) Vertreter: Mentzel, Norbert

(56) Entgegenhaltungen:
- EP-A- 0 431 369
- DE-A1- 19 537 672
- FR-A- 825 047
- FR-A- 2 256 677
- US-A- 2 142 456
- US-A- 2 812 204
- US-A- 3 201 161
- US-A- 3 586 361

## Beschreibung

Die Erfindung betrifft eine Vorrichtung zum Verriegeln und zum Betätigen von Klappen oder Türen, insbesondere an Fahrzeugen nach dem oberbegriff des Anspruchs 1.

Derartige Vorrichtungen werden vorzugsweise in klappbeweglichen Ladeböden von Personenkraftwagen verwendet. Die Vorrichtung umfasst dabei einen Riegel, der von einer Rückstellfeder in eine Sperrstellung gedrückt wird und dabei eine außerhalb der Klappe angeordnete ortsfeste Schulter hintergreift. Die Vorrichtung umfasst aber auch eine Handhabe, die von einer Federkraft in einer Ruhelage im Gehäuse gehalten wird. Die Handhabe ist manuell in eine Arbeitslage weiter verschwenkbar. Über an der Vorrichtung vorgesehene Steuermittel wird dann der Riegel aus seiner Sperrstellung in eine Freigabestellung überführt, wo der Riegel die ortsfeste Schulter freigibt. Dann kann die Klappe mittels der Handhabe geöffnet werden.

Aus der US 2,142,456 ist eine Vorrichtung der im Oberbegriff des Anspruches 1 angegebenen Art bekannt. Dort besteht der Riegel aus einem längsverschieblichen Schieber und das Federglied aus einer federbelasteten Klinke, die in einer Aussparung des Schiebers drehgelagert ist. Als Stößel fungiert eine Nase am freien Ende der Klinke und der Absatz im Gehäuse ist von einem Nietkopf gebildet, an dem sich die Klinke abstützt, um den Schieber in seiner Sperrstellung zu halten. Zur Federbelastung der Klinke wird eine Blattfeder verwendet, welche die Klinke gegen das Gehäuse gedrückt hält. Die bekannte Vorrichtung ist mit einem zweiten parallelen Schieber versehen, der von einer Sperre zurückgehalten wird, die von einer Steuerkurve am ersten Schieber freigegeben wird.

Die US 3,586,361 zeigt ein Türschloss mit einem Schieber, wo in einer Ausnehmung eines Schiebers ein Sperrhaken drehgelagert ist. Dieser Sperrhaken kann durch eine Schenkelfeder oder durch magnetische Wirkungen in eine Sperrstellung gebracht werden, wo er mit einen innenendigen Haken einen Endabsatz im Gehäuse hintergreift. Das Außenende des Schiebers weist eine Neigungsfläche auf, die mit einer entsprechend geneigten feststehenden Gegensteuerfläche am Tür-Rahmen zusammenwirkt, um den Schieber gegen seine Rückstellkraft einzuschieben und dabei den Sperrhaken löst.

Die EP 0 431 369 A2 zeigt ein Fallenschloss an einer Tür. Dort fungiert ein Fallenriegel als längsbeweglicher Schieber, an welchem über eine Lagerstelle ein zweiarmiger Auslösehebel schwenkgelagert ist. Der Auslösehebel hat an seinem nach außen weisenden Arm zwei Sperrnasen, die mit einem Schlossstulp an der Tür zusammenwirken. Aus dem Schlossstulp kann das vordere Ende des Fallenriegels in zwei unterschiedlichen Längen herausragen, nämlich bei geöffneter Tür mit einer kurzen Länge und bei einer geschlossenen Tür mit einer großen Länge. Das vordere Ende des Fallenriegels hat eine Auflaufschräge, die mit einem am festen Rahmen der Tür vorgesehenen Schließblech zusammenwirkt. Das Schließblech hat eine Einführöffnung, gegen welche eine am Vorderende des Auslösehebels vorgesehene Auslösernase fährt und dafür sorgt, dass eine äußere Sperrnase vom Auslösehebel bezüglich des Schlossstulps verschwenkt wird, um dann mit einer dahinter liegenden zweiten Sperrnase zusammenzuwirken. Die Rückstellfeder für den Fallenriegel stützt sich unmittelbar an einem Zapfen am inneren Arm des Auslösehebels ab und sorgt so für einen Hintergriff der ersten oder der zweiten Sperrnase des Auslösehebels an der Innenfläche des Schlossstulps.

Aus der FR 2 256 677 A ist ein kombinierter magnetischer Verschluss bekannt, wo in einem längsverschieblichen Schieber ein profilierter einarmiger Hebel schwenkgelagert ist und mit einem an der Tür schwenkgelagerten ortsfesten Steuerhebel zusammenwirkt. Zwischen dem schieberseitigen Steuerhebel und dem ortsfesten Hebel befinden sich zusammenwirkende Steuerflächen, die für drei längenmäßig unterschiedliche Ausfahrpositionen des Schiebers sorgen.

Ein Schieber in einem automatischen Verschluss an Türen und Fenstern ist aus der FR 825 047 A bekannt. Der Schieber sitzt in einem U-förmigen Gehäuse und besitzt eine Querbohrung, in welcher ein federbelasteter Knopf angeordnet ist, der ein abgesetztes Knopfende besitzt. Dieses abgesetzte Knopfende greift in ein Loch im Gehäuse ein, um den Schieber in einer Freigabestellung zu sichern. Beim Schließen der Tür oder des Fensters greift ein ortsfester Zapfen in das Loch des Gehäuses ein und drückt den Knopf aus dem Loch heraus. Dann kann eine Druckfeder den Schieber in seine Sperrstellung herausfahren.

Ein Schieber ohne ein Federglied ist aus der US 2,812,204 bekannt. Dort besitzt der Schieber und nicht das Gehäuse einen Absatz, der in einer Freigabestellung des Schiebers vom Schleifenscheitel einer zweiarmigen Schenkelfeder hintergriffen wird. Beim Schließen der Tür fährt das noch in seiner Freigabestellung befindliche Ende des Schiebers gegen eine Schrägfläche am Gegenschließmittel des Türpfostens und sorgt für ein Eindrücken des Schiebers gegen dessen Rückstellkraft. Dadurch soll der Schlaufenscheitel der Schenkelfeder sich vom Absatz im Schieber lösen und der Schieber aufgrund seiner Rückstellkraft in eine Sperrstellung hinter dem Gegenschließteil vom Türrahmen fahren.

Aus der DE 195 37 672 A1 ist ein gattungsgemässer Verschluss für einen Ladenboden in Personenkraftwagen bekannt. Dieser bekannte Verschluss besitzt zahlreiche Bauteile, die eine zeitaufwendige Montage erfordern. Ein weiterer Nachteil ist die große Bauhöhe dieser Vorrichtung, weil ihr Gehäuse die genannten zahlreichen Bauteile aufnehmen und lagern muss.

Der Erfindung liegt die Aufgabe zugrunde, eine platzsparende Vorrichtung der im Oberbegriff von Anspruch 1 genannten Art zu entwickeln. Dies wird erfindungsgemäß durch die im Anspruch 1 erwähnten Maßnahmen erreicht, denen folgende besondere Bedeutung zukommt.

Besonders vorteilhaft aus fertigungstechnischen Gründen ist es, die Zunge einstückig mit dem Schieber auszubilden. Schieber und Zunge sind dann durch einen Ausschnitt voneinander getrennt und gehen von einem gemeinsamen Basisstück am Innenende des Schiebers aus. An diesem Basisstück stützt sich die Feder ab, die für die Rückstellkraft des Schiebers sorgt.

Zur Anordnung des Stößels gibt es vier verschiedene Möglichkeiten, die in den Unteransprüchen 2, 3 und 4 näher beschrieben sind. Jede dieser Möglichkeiten bringt ihre besonderen Vorteile. Eine erste Möglichkeit, gemäß Anspruch 2, besteht darin, den Stößel am Federglied anzuordnen. Dadurch wird mittels des Stößels beim Schließen der Klappe das Federglied unmittelbar zurückgedrückt.

Eine Alternative dazu ist in Anspruch 3 genannt. Hier befindet sich der Stößel an einem Gegenfederglied und ist mit seinem Stößelende gegen die Stützfläche gerichtet. Bei offener Klappe ragt das Stößelende an der Unterseite der Klappe federnd heraus. Das Gegenfederglied ist wenigstens bereichsweise unterhalb des schieberseitigen Federglieds angeordnet. Beim Schließen der Klappe wird das Federglied mittelbar, über das Gegenfederglied, vom Stößel zurückgedrückt.

Schließlich wäre es, in einem dritten und vierten Ausführungsbeispiel gemäß Anspruch 4, möglich, den Stößel an der ortsfesten Stützfläche anzuordnen und sein Stößelende entweder gegen das Federglied von Anspruch 2 oder gegen das Gegenfederglied von Anspruch 3 zu richten. Das Stößelende ist mit einer Öffnung an der Unterseite der Klappe ausgerichtet, in welche beim Schließen der Klappe das Stößelende einfährt und gegen das Federglied von Anspruch 2 oder das Gegenfederglied von Anspruch 3 stößt.

Weitere Maßnahmen und Vorteile der Erfindung ergeben sich aus den Unteransprüchen, der nachfolgenden Beschreibung und den Zeichnungen. In den Zeichnungen sind Ausführungsbeispiele der Erfindung im Längsschnitt und in Vergrößerung während verschiedener Arbeitsphasen dargestellt. Es zeigen:
- Fig. 1: ein erstes Ausführungsbeispiel der erfindungsgemäßen Vorrichtung, wo die Klappe geschlossen ist, der Riegel sich in seiner Sperrstellung befindet und die unbetätigte Handhabe ihre Ruhelage einnimmt,
- Fig. 2: die gleiche Vorrichtung bei geschlossener Klappe, wenn die Handhabe sich schon in einer Anfangsphase ihrer Betätigung befindet, während der Riegel noch in seiner Sperrstellung ist,
- Fig. 3: die gleiche Vorrichtung, nachdem eine Endbetätigung der Handhabe erfolgte und der Riegel in seine Freigabestellung überführt worden ist und die sicher von der Hand erfasste Handhabe dabei ist, die Klappe zu öffnen,
- Fig. 4: die gleiche Vorrichtung, nachdem die Handhabe losgelassen wurde und sich wieder in ihre Ruhelage im Gehäuse zurückbewegt hat, der Riegel aber sich noch in seiner Freigabestellung befindet und die Klappe dabei ist, geschlossen zu werden und
- Fig. 5 bis 7: die entsprechenden Längsschnitte einer zweiten Ausführung der erfindungsgemäßen Vorrichtung, wobei diese Figuren die zu Fig. 1, 2 und 3 analogen Positionen der Bauteile einnehmen.

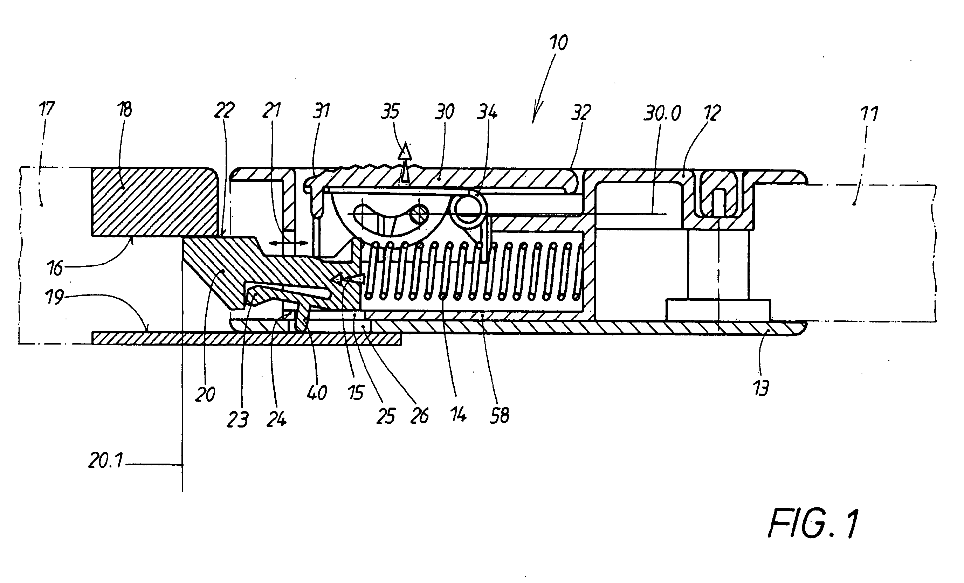

Die in den Fig. 1 bis 4 gezeigte erste Vorrichtung 10 nach der Erfindung ist am freien Ende einer Klappe 11 eingebaut, von der lediglich ein Bruchstück strichpunktiert verdeutlicht ist. In der Klappe 11 ist in ein die verschiedenen Bauteile der Vorrichtung 10 aufnehmendes zweiteiliges Gehäuse 12, 13 integriert. Die beiden Gehäuseteile bestehen aus einem profilierten Gehäuseoberteil 12 und einem Gehäuseboden 13. Im Gehäuseoberteil 12 befindet sich ein Riegel 20, der als Schieber ausgebildet ist und im Gehäuse im Sinne des Doppelpfeils 21 längsbeweglich ist. Das Innenende des Schiebers 22 wird von einer Rückstellfeder 14 im Sinne des Kraftpfeils 15 federbelastet und dadurch normalerweise aus dem Gehäuse 12, 13 herausgeschoben. Das Verriegelungsende 22 vom Schieber 20 hintergreift dann eine ortsfeste Schulter 16 eines im strichpunktiert verdeutlichten Fahrzeugboden 17 befindlichen massivem Sperrstücks 18. Dann befindet sich der Schieber 20 in seiner durch eine Hilfslinie 20.1 verdeutlichten Sperrstellung gemäß Fig. 1. Im Fahrzeugboden 17 ist außerdem noch eine ortsfeste Stützfläche 19 vorgesehen, an der sich die geschlossene Klappe 11 mit der Unterseite des Gehäusebodens 13 abstützt.

Die Sperrstellung 20.1 vom Schieber 20 wird durch innere Anschläge bestimmt, gegen welche die Rückstellkraft 15 wirkt. Als solcher Anschlag eignet sich beispielsweise ein in Fig. 1 gezeigte Stößel 40, der einstückig mit einer biegsamen Zunge 23 ausgebildet ist. Die Zunge 23 erzeugt ein im Schieber 20 integriertes Federglied. Der Stößel 40 stützt sich in Fig. 1 unter anderem mit seiner Außenflanke an einem Absatz 24 im Bodenbereich 58 des Gehäuseoberteils 12 ab. Dem Stößel 40 kommt noch eine weitere, später eingehend zu beschreibende Funktion zu. Der Absatz 24 entsteht hier durch die Innenkante eines Ausbruchs 25 im Bodenbereich des Gehäuseoberteils 12. Unter dem Ausbruch 25 befindet sich auch noch eine Öffnung 26 im Gehäuseboden 13.

Im Gehäuse 12, 13 ist eine Handhabe 30 in besonderer Weise schwenkbar gelagert. Die Handhabe umfasst zwei, als Außenende 31 und Innenende 32 noch näher zu beschreibende Endbereiche und wird von einer Federkraft 35 in einer durch die Hilfslinie 30.0 in Fig. 1 verdeutlichten Ruhelage gehalten. Die Federkraft 35 wird von einer sich zwischen der Innenseite der Handhabe 30 und dem Gehäuseoberteil 12 mit seinen beiden Schenkeln abstützende Schenkelfeder 34 erzeugt. In der Ruhelage 30.0 befindet sich die Handhabe 30 mit ihrer Außenseite im wesentlichen bündig mit der Oberfläche vom Gehäuseoberteil 12.

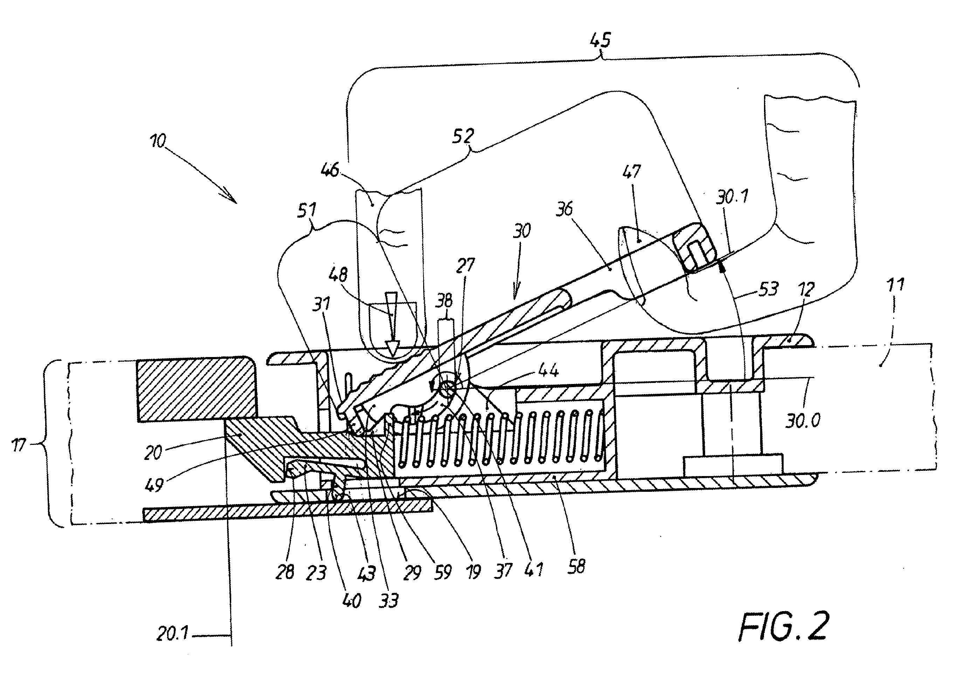

Wie aus Fig. 2 zu erkennen ist, dient zur Lagerung der Handhabe 30 ein einziger Achsbolzen 27, der in einem Lagerbock 44 vom Gehäuseoberteil 12 aufgenommen ist. Der Achsbolzen 27 durchsetzt einen Schlitz 37 und befindet sich in einem auf der Unterseite der Handhabe 30 sitzenden rippenartig nach unten vorstehenden Lappen 33. Es könnten, im Breitenabstand zueinander, zwei solcher Lappen 33 an der Handhabe 30 vorgesehen sein, in welchen zwei Enden des gleichen Achsbolzens 27 hineinragen. Im Normalfall, gemäß Fig. 1 und 2, befindet sich der Achsbolzen 27 in einem ersten Abschnitt 38 des Schlitzes 37 und bestimmt damit eine mit 41 in Fig. 2 markierte erste Schwenkachsen-Lage bezüglich der Handhabe 30. Dieser Abschnitt 38 vom Schlitz 37 ist zugleich der eine Endabschnitt des Kreissegments 37, der nun als erstes Lagerauge für den Achsbolzen 27 fungiert und daher "Anfangsabschnitt" genannt werden soll.

Die Fig. 2 zeigt die bereits eingangs angesprochene Anfangsphase 53 der Betätigung der Handhabe 30, wo im Bereich des Außenendes 31 ein durch einen Kraftpfeil 48 verdeutlichter manueller Druck von einem Finger 46 der menschlichen Hand 45 ausgeübt wird. Die erste Schwenkachse 41 bestimmt eine Zweiarmigkeit der Handhabe 30 mit den beiden von einander weggerichteten Hebelarmen 51, 52. Der Hebelarm 51 wird abwärts geschwenkt, wodurch der andere Hebelarm 52 aus dem Gehäuseoberteil 12 herausgelangt. Dann ist eine dort vorgesehene Griffstelle 36 für die Handspitzen 47 der menschlichen Hand 45 bequem zugänglich.

In Fig. 2 befindet sich die um die Achse 41 verschwenkte Handhabe 30 in einer durch die Hilfslinie 30.1 verdeutlichten Zwischenlage 30.1. Dabei kommt ein auf der Unterseite der Handhabe 30 vorgesehener Ansatz 49 in den Bereich eines Hohlprofils 29 vom Schieber 20, wodurch der Schieber 20 zunächst noch in seiner beschriebenen Sperrstellung 20.1 verbleibt. Die Klappe 11 ist immer noch gegenüber dem Fahrzeugboden 17 verriegelt.

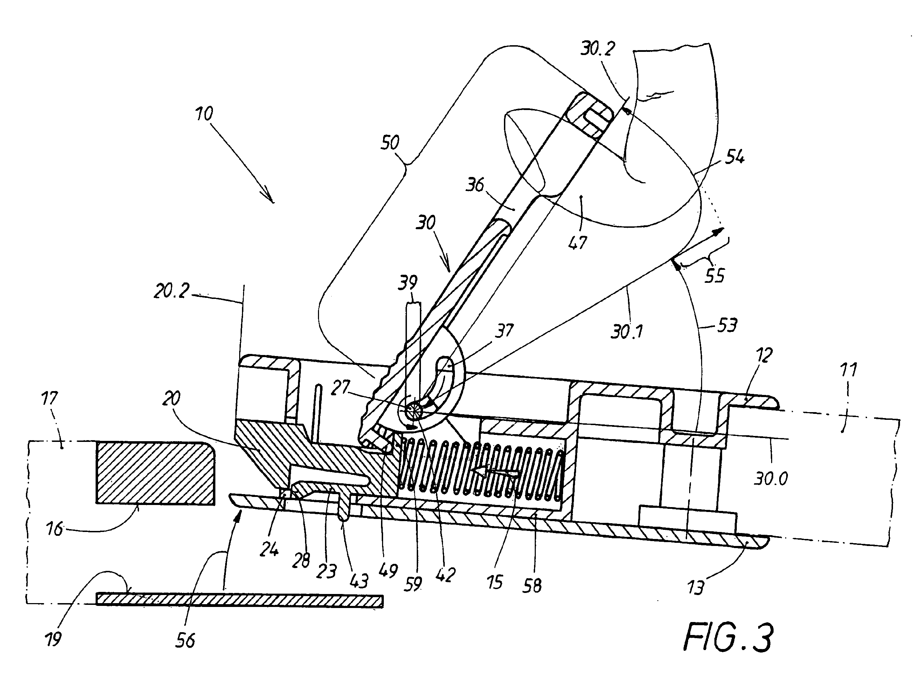

Dies ändert sich erst während der aus Fig. 3 ersichtlichen Endphase 54 der Schwenkbetätigung der Handhabe 30. Es kommt aber dabei zu einem Längsversatz der Handhabe 30 um die mit 55 in Fig. 3 bezeichneten Strecke. Dies geschieht, weil das Ende vom Handhaben-Ansatz 49 die äußere Flanke gegen das Hohlprofil 29 im Schieber 20 stößt und vom Ansatz 49 auf einen am Ende vom Hohlprofil 29 sitzenden Stegs trifft. Auf diesem Weg wird die Handhabe 20 um die Strecke 55 längsverschoben. Dadurch wandert der Achsbolzen 27 in einen aus Fig. 3 erkennbaren zweiten Abschnitt des Schlitzes 37. Es handelt sich hier um das andere Ende des Kreissegments, welches jetzt als Lagerstelle für die Handhabe 30 fungiert. Dort entsteht jetzt die in Fig. 3 mit 42 gekennzeichnete zweite Lage der Schwenkachse für die Handhabe 30. Die Schwenkachse 42 ist in der Handhabe 30 um das vorerwähnte Längenstück 55 gegenüber der ersten Achse 41 versetzt. Die Handhabe 30 fungiert jetzt als einarmiger Hebel 50. Der in Fig. 3 erreichten Schwenkposition 30.2 von Fig. 3 kommt noch folgende besondere schließtechnische Bedeutung zu.

Ausweislich der Fig. 3 wird während der Endphase 54 der Schwenkbetätigung der Riegel 20 über seinen Steg 59 vom handhabenseitigen Ansatz 49 ins Gehäuse 12, 13 gegen die auf ihn wirkende Rückstellkraft 15 eingefahren und gibt die ortsfeste Schulter 16 im Fahrzeugboden 17 frei. Der Schieber 20 befindet sich dann in der, in Fig. 3 mit 20.2 gekennzeichneten Freigabestellung. Die Klappe 11 kann jetzt über die zuverlässig die Griffstelle 36 von der Handhabe 30 erfassende Handspitze 47 im Sinne des Anhebungspfeils 56 von Fig. 3 geöffnet werden.

In der zurückgeschobenen Freigabestellung 20.2 ist, im Vergleich zu Fig. 2, zweierlei geschehen. Zunächst hat sich die Zunge 23 mit ihrem freien Ende 28 soweit zurückbewegt, dass das Zungenende 28 jetzt, in Fig. 3, mit dem bereits eingangs erwähnten Absatz 24 vom Gehäuseoberteil 12 ausgerichtet ist. In der Sperrstellung 20.1 von Fig. 2 stützt sich der Stößel 40 mit seinem freien Stößelende 43 noch an der Stützfläche 19 vom Fahrzeugboden 17 ab. Das hatte zur Folge, dass die Zunge 23 von der Stützfläche 19 weg, nach oben gebogen wurde. Das Zungenende 28 befand sich dann in einer unwirksamen Position und gab den Gehäuse-Absatz 24 frei.

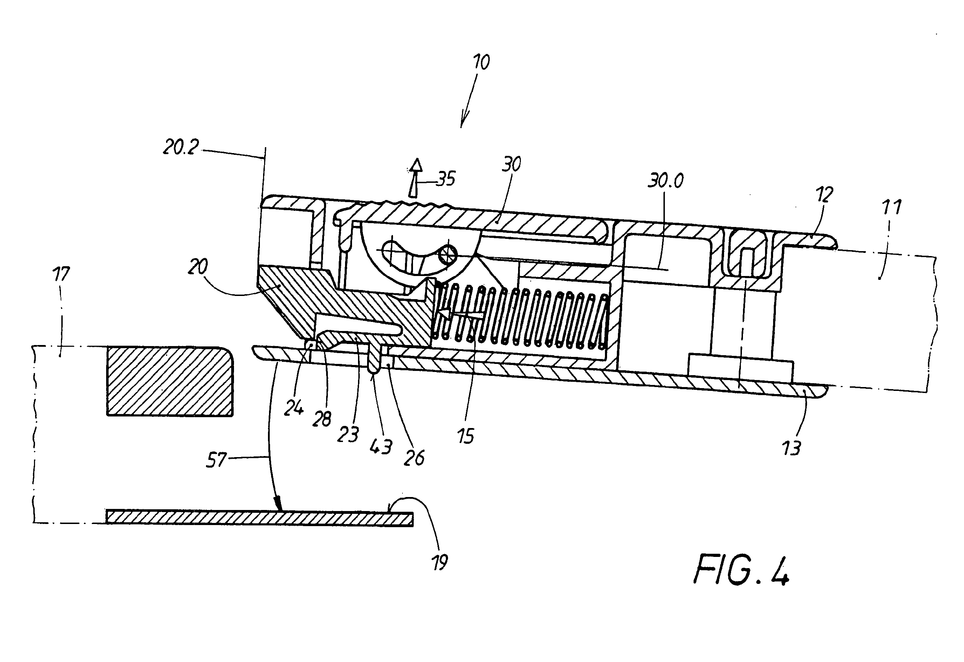

In Fig. 3 dagegen, wo die Klappe 11 sich der Stützfläche 19 bereits abgehoben hat, ist das Stößelende 43 freigegeben. Die Zunge 23 kann sich entspannen, fährt daher mit ihrem Zungenende 28 hinter den gehäuseseitigen Absatz 24 und arretiert dadurch den Schieber 20 in dessen Freigabestellung 20.2. Die vorbeschriebene endgültige Schwenklage 30.2 der Handhabe 30 erweist sich somit als "Arbeitslage" zur Verstellung des Schiebers 20. Diese Verrastung zwischen dem Zungenende 28 und dem Absatz 24 bleibt während der gesamten Anhebebewegung 56 und auch zu Beginn der späteren, aus Fig. 4 ersichtlichen Absenkbewegung 57 erhalten. Der Schieber 20 bleibt in seiner Freigabestellung 20.2.

In Fig. 4 ist, wie bereits gesagt wurde, die Absenkbewegung 57 der Klappe 11 dargestellt. Die Hand hat die Handhabe 30 freigegeben. Deshalb ist die Handhabe 30 aufgrund der in Fig. 1 erläuterten Rückstellkraft 35 wieder in ihre Ruhelage 30.0 im Gehäuse 12, 13 zurückgelangt. Das Stößelende 43 der Zunge 23 ragt frei aus der unterseitigen Öffnung 26 vom Gehäuseboden 13 heraus und ist gegen die ortsfeste Stützfläche 19 im Fahrzeugboden 17 gerichtet. Wenn aber die Klappe 11 ihre Anschlagposition an dieser Stützfläche 19 erreicht, dann trifft das Stößelende 43 auf die Stützfläche 19 und biegt die Zunge 23 wieder so zurück, wie es in Fig. 1 zu erkennen ist. Dann hat aber das Zungenende 28 den gehäuseseitigen Absatz 24 freigegeben. Dadurch kann die Rückstellkraft 15 den Schieber 20 in seine Sperrstellung 20.1 von Fig. 1 überführen, wo er die Schulter 16 im Fahrzeugboden 17 hintergreift. Es liegen wieder die Verhältnisse von Fig. 1 vor.

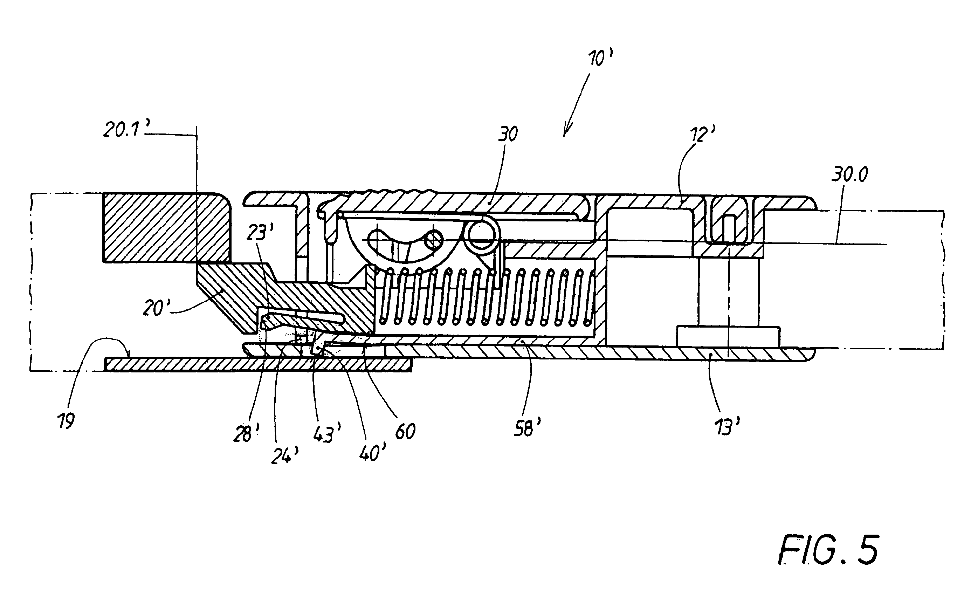

Wie bereits erwähnt wurde, ist in den Fig. 5 bis 7 ein zweites Ausführungsbeispiel 10' der erfindungsgemäßen Vorrichtung gezeigt. Soweit ein übereinstimmender Aufbau mit der ersten Vorrichtung 10 von Fig. 1 bis 4 vorliegt, wurden die gleichen Bezugszeichen verwendet. Insoweit gilt die bisherige Beschreibung. Es braucht lediglich auf die Unterschiede eingegangen zu werden.

Der wesentliche Unterschied besteht darin, dass ein Stößel 40' statt am Schieber 20' aus einem am Gehäuse angeformten Gegenfederglied 60 befindet. Dieses Gegenfederglied 60 entsteht durch einen Spalt im Bodenbereich 58' vom Gehäuseoberteil 12' in Fig. 5 an jener Stelle, wo im entsprechenden Bodenbereich 58 der ersten Vorrichtung 10 gemäß Fig. 1 der Ausbruch 25 vorgesehen war. Damit ist auch das Gegenfederglied 60 nach Art einer Zunge ausgebildet und soll daher, zwecks Unterscheidung von der schieberseitigen Zunge 23' als "Gegenzunge" bezeichnet werden. Die Zunge 23' der Vorrichtung 10' hat also eine glatte Unterseite, ohne Stößel.

Die Fig. 5 zeigt wieder, analog zur Fig. 1, die Ruhelage 30.0 der Handhabe 30 einerseits und die Sperrstellung 20.1' des Schiebers 20' andererseits. Dabei stützt sich das an der Gegenzunge 60 befindliche Stößelende 43' an der ortsfesten Stützfläche 19 ab und verbiegt dabei nicht nur seine eigene Gegenzunge 60, sondern auch die oberhalb von ihr angeordnete schieberseitige Zunge 23'. Das freie Zungenende 28' nimmt dabei gegenüber dem Absatz 24' vom Gehäuseoberteil 12' eine ähnliche Höhenposition ein, wie das Zungenende 28 in Fig. 1.

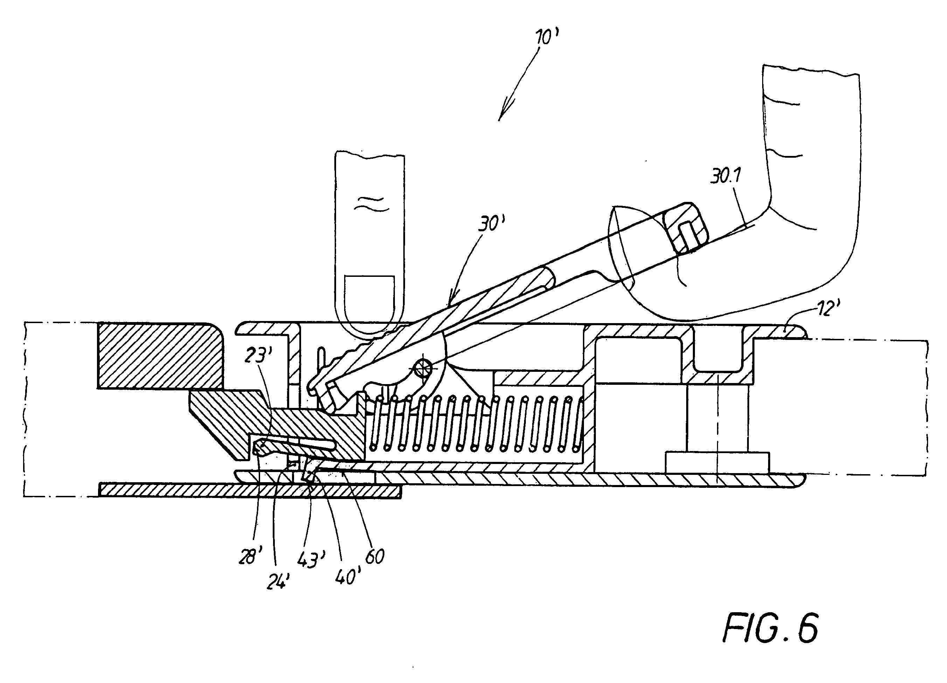

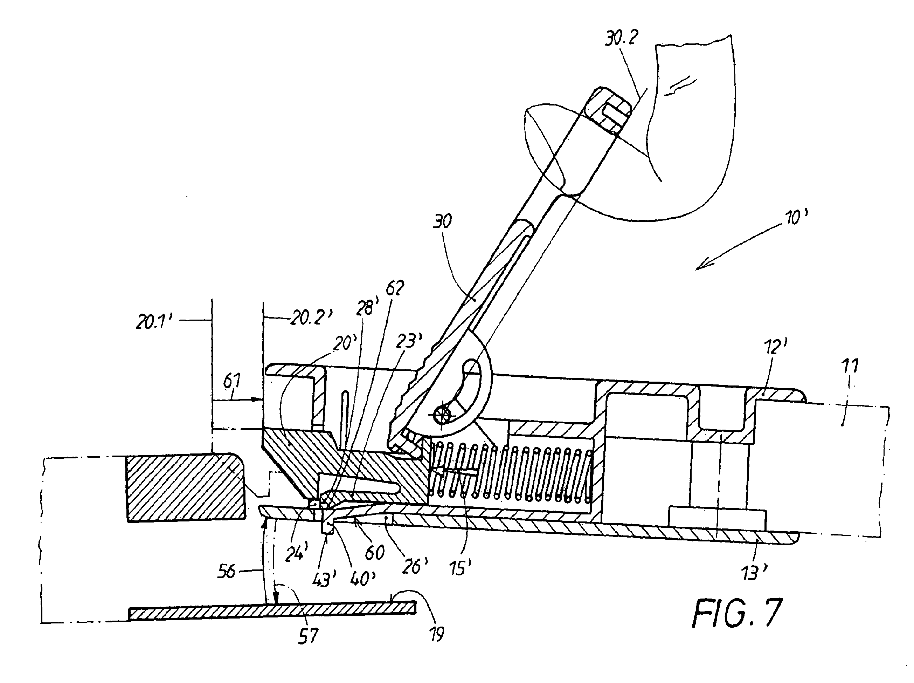

Wie bereits bei der Figurenbenennung erwähnt wurde, entspricht die Fig. 6 der Vorrichtung 10' den Verhältnissen in Fig. 2 der vorausgehend beschriebenen Vorrichtung 10. In Fig. 6 liegt die beschriebene Zwischenposition 30.1 der Handhabe 30 vor. Die Zunge 23' und die Gegenzunge 60 nehmen, in Analogie zu Fig. 2, die gleichen Stellungen wie in Fig. 5 bei der Vorrichtung 10' ein. Dies ändert sich erst in Fig. 7.

In Fig. 7 liegt, in Analogie zu Fig. 3 der vorausgehend beschriebenen Vorrichtung 10, die Arbeitslage 30.2 der Handhabe 30 vor. Der Schieber 20' ist um die Strecke 61 in seine Freigabestellung 20.2' zurückgeschoben. Beim Übergang von Fig. 6 auf Fig. 7 blieb natürlich die Gegenzunge 60 vom Gehäuseoberteil 12' stehen, während die sich darauf abstützende schieberseitige Zunge 23' soweit zurückgeschoben wurde, bis, in Fig. 7, das freie Zungenende 28' in Ausrichtung mit dem gehäuseseitigen Absatz 24' gekommen ist. Wenn dann die Klappe, gemäß Fig. 7, im Sinne des Pfeils 26 angehoben wird, entspannt sich die Gegenzunge 60 und drückt das freie Ende 43' des von ihr getragenen Stößels 40' aus der Öffnung 26' des zugehörigen Gehäusebodens 13' heraus.

Damit kann es bei der analogen, im Zusammenhang mit Fig. 4 beschriebenen Absenkbewegung 57 der Klappe 11 wieder zu seiner Wechselwirkung des in Fig. 7 gezeigten Stößelendes 43' mit der Stützfläche 19 kommen. Dann wird, über den Stößel 40', die Gegenzunge 60 im Sinne von Fig. 5 zurückgedrückt, wodurch die auf ihrer Oberseite 62 sich abstützende schieberseitige Zunge 23' in analoger Weise zurückgedrückt wird. Dann gibt ihr freies Zungenende 28' den gehäuseseitigen Absatz 24' wieder frei. Der Schieber 20' wird dann von seiner Rückstellkraft 15 in seine Sperrstellung 20.1' von Fig. 5 zurückgeschoben. Wenn die Handhabe 30 in Fig. 7 freigegeben ist, liegen auch wieder die gleichen Verhältnisse wie in Fig. 5 vor.

### Bezugszeichenliste :

- 10: erste Vorrichtung (Fig. 1 bis 4)
- 10': zweite Vorrichtung (Fig. 5 bis 7)
- 11: Klappe (Fig. 1)
- 12: Gehäuse, Gehäuseoberteil (Fig. 1)
- 12': Gehäuse, Gehäuseoberteil (Fig. 5 bis 7)
- 13: Gehäuse, Gehäuseboden (Fig. 1)
- 13': Gehäuse, Gehäuseboden (Fig. 5 bis 7)
- 14: Rückstellfeder (Fig. 1)
- 15: Pfeil der Rückstellkraft von 14 auf 20 (Fig. 1)
- 15': Pfeil der Rückstellkraft für 20' (Fig. 7)
- 16: Schulter für 22 (Fig. 1)
- 17: Fahrzeugboden (Fig. 1)
- 18: Sperrstück in 17 (Fig. 1)
- 19: Stützfläche in 17 (Fig. 1)
- 20: Riegel, Schieber (Fig. 1)
- 20': Riegel, Schieber (Fig. 5 bis 7)
- 20.1: Sperrstellung von 20 (Fig. 2)
- 20.1': Sperrstellung von 20' (Fig. 5 bis 7)
- 20.2: Freigabestellung von 20 (Fig. 1)
- 20.2': Freigabestellung von 20' (Fig. 5 bis 7)
- 21: Pfeil der Längsbewegung von 20 (Fig. 1)
- 22: Verriegelungsende von 20 (Fig. 1)
- 23: Federglied, biegsame Zunge (Fig. 1)
- 23': Federglied, biegsame Zunge (Fig. 5 bis 7)
- 24: Absatz in 12 (Fig. 1)
- 24': Absatz in 12' (Fig. 5 bis 7)
- 25: Ausbruch in 12 (Fig. 1)
- 26: Öffnung in 13 (Fig. 1)
- 26': Öffnung in 13' (Fig. 5 bis 7)
- 27: Achsbolzen (Fig. 2)
- 28: freies Zungenende von 23 (Fig. 2)
- 28': freies Zungenende von 23' (Fig. 7)
- 29: Hohlprofil in 20 für 49 (Fig. 2)
- 30: Handhabe (Fig. 1)
- 30.0: Ruhelage von 30 (Fig. 1 bzw. Fig. 5)
- 30.1: Zwischenlage von 30 (Fig. 2 bzw. Fig. 6)
- 30.2: Arbeitslage von 30 (Fig. 3 bzw. Fig. 7)
- 31: Außenende von 30 (Fig. 1)
- 32: Innenende von 30 (Fig. 1)
- 33: Lappen an 30 (Fig. 1)
- 34: Schenkelfeder für 30 (Fig. 1)
- 35: Pfeil der Federkraft von 34 auf 30 (Fig. 1)
- 36: Griffstelle von 30 für 47 (Fig. 2, 3)
- 37: Schlitz, Kreissegment (Fig. 2)
- 38: erster Abschnitt, Anfangsabschnitt von 37 (Fig. 2)
- 39: zweiter Abschnitt, Endabschnitt von 37 (Fig. 3)
- 40: Stößel an 23 (Fig. 1)
- 40': Stößel an 60 (Fig. 5)
- 41: erste Schwenkachse für 30 (Fig. 2 bzw. 6)
- 42: zweite Schwenkachse von 30 (Fig. 3 bzw. 7)
- 43: Stirnende von 40 (Fig. 2, 3)
- 43': Stirnende von 40' (Fig. 5)
- 44: Lagerbock in 12 für 27 (Fig. 2)
- 45: menschliche Hand (Fig. 2)
- 46: Finger von 45 (Fig. 2)
- 47: Handspitze von 45 (Fig. 2)
- 48: manueller Druck auf 31 (Fig. 2)
- 49: Ansatz an 30 (Fig. 2)
- 50: einarmiger Hebel von 30 (Fig. 3)
- 51: erster Arm von 30 (Fig. 2)
- 52: zweiter Arm von 30 (Fig. 2)
- 53: Anfangsphase der Schwenkbetätigung von 30 (Fig. 2)
- 54: Endphase der Schwenkbetätigung von 30 (Fig. 3)
- 55: Längsversatz zwischen 53, 54 (Fig. 3)
- 56: Anhebebewegung von 11 (Fig. 3)
- 57: Absenkbewegung von 11 (Fig. 4)
- 58: Bodenbereich von 12 (Fig. 1)
- 58': Bodenbereich von 13' (Fig. 5)
- 59: Steg an 20 (Fig. 2, 3)
- 60: Gegenfederglied, Gegenzunge
- 61: Einschubstrecke von 20' zwischen 20.1' und 20.2' (Fig. 7)
- 62: Oberseite von 23' (Fig. 7)

## Patentansprüche

1. Vorrichtung (10; 10') zum Verriegeln und zum Betätigen von Klappen (11) oder Türen, insbesondere an Fahrzeugen
mit einem im eingebauten Zustand in der Klappe (11) sitzenden Gehäuse (12; 13),
mit einem im Gehäuse (12; 13) beweglichen Riegel (20; 20'), der von einer Rückstellkraft (15) einer Rückstellfeder (14) in eine Sperrstellung (20.1; 20.1') gedrückt wird und dann bei geschlossener Klappe (11) eine außerhalb der Klappe (11) im Fahrzeug anordenbare ortsfeste Schulter (16) hintergreifen kann,
wobei der Riegel ein Schieber (20, 20') ist, der im Gehäuse (12; 13) längsverschieblich geführt ist,
und mit einer Handhabe (30), die von einer Federkraft (35) in eine Ruhelage (30.0) im Gehäuse (12, 13) gehalten wird und manuell so weit in eine Arbeitslage (30.2) verschwenkbar (53, 54) ist,
bis Steuermittel den Schieber (20; 20') aus der Sperrstellung (20.1; 20.1') in eine Freigabestellung (20.2; 20.2') bringen, wo die ortsfeste Schulter (16) freigegeben ist und die Klappe (11) mittels der Handhabe (30) geöffnet (56) werden kann,
mit einem Federglied (23; 23') am Schieber (20; 20'), welches in der Freigabestellung (20.2; 20.2') des Schieber und bei geöffneter Klappe (11) einen Absatz (24; 24') im Gehäuse (12; 13) hintergreift,
mit einem Stößel (40; 40'), der zwischen dem Federglied (23; 23') und einer im Fahrzeug ortsfesten Stützfläche (19), an der sich die geschlossene klappe (11) abstüzt, angeordnet ist,
wobei der Stößel (40; 40') bei geschlossener Klappe (11) das Federglied (23; 23') soweit zurückdrückt,
bis das Federglied (23; 23') den Absatz (24; 24') am Gehäuse (12; 13) verlässt und den Schieber (20; 20') von seiner Rückstellkraft (15) in seine Sperrstellung (20.1; 20.1') verschoben wird,
**dadurch gekennzeichnet ,**
**dass** das Federglied aus einer biegsamen Zunge (23; 23') besteht, die am Schieber (20; 20') sitzt.

2. Verschluss (10) nach Anspruch 1, **dadurch gekennzeichnet, dass** der Stößel (40) am Federglied (23) sitzt und im eingebauten Zustand mit seinem Stößelende (43) gegen die Stützfläche (19) gerichtet ist,
und dass das Stößelende (43) bei offener Klappe (11) an der Unterseite der Klappe (11) federnd herausragt, aber bei geschlossener Klappe (11) das Federglied (23) unmittelbar zurückdrückt.

3. Verschluss (10') nach Anspruch 1, **dadurch gekennzeichnet, dass** der Stößel (40') an einem Gegenfederglied (60) sitzt, im eingebauten Zustand mit seinem Stößelende (43') gegen die Stützfläche (19) gerichtet ist und bei offener Klappe (11) an der Unterseite der Klappe (11) federnd herausragt,
dass das Gegenfederglied (60) wenigstens bereichsweise unterhalb des schieberseitigen Federglieds (23') angeordnet ist
und dass der Stößel (40') bei geschlossener Klappe (11) das Federglied (23') mittelbar über das Gegenfederglied (60) zurückdrückt.

4. Verschluss nach Anspruch 1, 2 oder 3, **dadurch gekennzeichnet, dass** im eingebauten Zustand der Stößel an der ortsfesten Stützfläche sitzt mit seinem Stößelende gegen das Federglied oder das Gegenfederglied gerichtet ist,
und dass der Stößel mit einer Öffnung an der Unterseite der Klappe ausgerichtet ist,
in welche das Stößelende bei geschlossener Klappe einfährt und gegen das Federglied oder das Gegenfederglied stößt.

5. Verschluss (10') nach einem der Ansprüche 3 oder 4, **dadurch gekennzeichnet, dass** das Gegenfederglied am Gehäuse (13) aus einer biegsamen Gegenzunge (60) gebildet ist.

6. Verschluss (10; 10') nach einem der Ansprüche 1 bis 5, **dadurch gekennzeichnet, dass** die Zunge (23; 23') einstückig mit dem Schieber (20; 20') und/oder die Gegenzunge (60) einstückig mit dem Gehäuse (13) ausgebildet sind.

7. Verschluss (10) nach einem der Ansprüche 1 bis 6, **dadurch gekennzeichnet, dass** die Steuermittel für den Riegel (20) aus einer Schulter (49) an der Handhabe (30) und einer Gegenschulter (59) am Riegel (20) bestehen,
dass die Schulter (49) und die Gegenschulter (59) mindestens in der Ruhelage (30.0) voneinander entfernt sind,
aber spätestens beim Weiterverschwenken (54) von einer Zwischenlage (30.1) in die Arbeitslage (30.2) aneinander stoßen,
und dabei den Riegel (20) aus der Sperrstellung (20.1) in die Freigabestellung (20.2) überführen (21).

8. Verschluss (10) nach Anspruch 7, **dadurch gekennzeichnet, dass** der Schieber (20) einen gegen die Handhabe (30) weisenden Steg (59) und die Handhabe (30) einen dem Schieber (20) zugekehrten Ansatz (49) besitzen,
wobei die eine Flanke des Stegs (59) die Schulter und das Ende des Ansatzes (49) die Gegenschulter zur Verstellung (21) des Schiebers (20) erzeugen.

## Claims

1. Locking device (10; 10') for locking and operating lids (11) or doors, especially on vehicles
with a housing (12; 13), seated, in the installed condition, in the lid (11),
with a bolt (20; 20') that moves in the housing (12; 13) and is forced into a locked position (20.1; 20.1') by a resetting force (15) of a return spring (14) and then, when the lid (11) is closed, can engage behind a fixed shoulder (16) that can be arranged in the vehicle outside the lid (11), with the bolt being a slide (20; 20') that can slide lengthwise in the housing (12; 13)
and with a handle (30) that is held in an at-rest position (30.0) in the housing (12, 13) by a spring force (35) and can be manually swung (53, 54) into a working position (30.2)
until control means move the slide (20; 20') from the locked position (20.1; 20.1') to a released position (20.2; 20.2') at which the fixed shoulder (16) is released and the lid (11) can be opened (56) by means of the handle (30),
with a spring element (23; 23') on the slide (20; 20') which in the released position (20.2; 20.2') and when the lid (11) is open engages behind a projection (24; 24') in the housing (12, 13),
with a plunger (40; 40'), arranged between the spring element (23' 23') and a fixed supporting surface (19) on which the closed lid (11) is supported, arranged in the vehicle,
with the lid closed (11) the plunger (40; 40') forcing the spring element (23; 23') back
until the spring element (23; 23') leaves the projection (24; 24') on the housing (12; 13) and the slide (20; 20') is pushed by its resetting force (15) into a locked position (20.1; 20.1'),
**characterized in that**
the spring element consists of a flexible tongue (23; 23') that sits on the slide (20; 20').

2. Locking device (10) according to Claim 1, **characterized in that** the plunger (40) is seated on the spring element (23) and, in the installed state, the plunger end (43) is directed against the supporting surface (19),
and that when the lid (11) is open the plunger end (43) projects outwards on the underside of the lid (11) under spring pressure, but when the flap (11) is closed the spring element (23) is directly pushed back.

3. Locking device (10') according to Claim 1, **characterized in that** the plunger (40') in the installed state is seated on an opposing spring element (60) and the plunger end (43') is directed against the supporting surface (19) and, when the lid (11) is open, projects outwards on the underside of the lid (11) under spring pressure,
the opposing spring element (60) is arranged at least partially under the plunger end of the spring element (23')
and when the lid (11) is closed the plunger (40') pushes the spring element (23') indirectly over the opposing spring element (60).

4. Locking device according to Claim 1, 2 or 3, **characterized in that** in the installed state the plunger is seated on the fixed supporting surface with the end of the plunger directed against the spring element or the opposing spring element,
and that the plunger is aligned with an opening on the underside of the lid,
into which the end of the plunger enters and strikes against the spring element or the opposing spring element when the lid is closed.

5. Locking device (10') according to one of Claims 3 or 4, **characterized in that** the opposing spring element is formed by a flexible opposing tongue (60) on the housing (13).

6. Locking device (10; 10') according to one of Claims 1 to 5, **characterized in that** the tongue (23; 23') forms a single piece with the slide (20; 20') and/or the opposing tongue (60) forms a single piece with the housing (13).

7. Locking device (10) according to one of Claims 1 to 6, **characterized in that** the control means for the bolt (20) consists of a shoulder (49) on the handle (30) and an opposing shoulder (59) on the bolt (20),
the shoulder (49) and the opposing shoulder (59) are at a distance from each other at least in the at-rest position (30.0),
but strike against each other not later than when swung further (54) from an intermediate position (30.1) to the working position (30.2),
and in the doing so moves (21) the bolt (20) from the locked position (20.1) to the released position (20.2).

8. Locking device (10) according to Claim 7, **characterized in that** the slide (20) has a web (59) facing towards the handle (30) and the handle (30) has a lug (49) facing towards the slide (20),
with the one face of the web (59) creating the shoulder and the end of the lug (49) forming the opposing shoulder for displacement (21) of the slide (20).

## Revendications

1. Dispositif (10; 10') servant à verrouiller et actionner des couvercles (11) ou portes, notamment sur des véhicules,
avec un boîtier (12; 13) reposant, lorsqu'à l'état incorporé, dans le couvercle (11),
avec un verrou (20; 20') mobile dans le boîtier (12; 13), verrou que la force de rappel (15) d'un ressort de rappel (14) pousse dans une position de verrouillage (20.1; 20.1') et ensuite, lorsque le couvercle (11) est fermé, un épaulement (16) fixe agençable hors du couvercle (11) dans le véhicule pouvant intervenir par l'arrière, le verrou étant un coulisseau (20; 20') guidé dans le boîtier (12; 13) de sorte à se déplacer long itud inalement,
et avec un moyen de maniement (30) maintenu par la force d'un ressort (35) dans une position de repos (30.0) dans le boîtier (12, 13) et qui se laisse pivoter (53, 54) manuellement dans une position de travail (30.2)
jusqu'à ce que des moyens de commande fassent que le coulisseau (20; 20') quitte la position de verrouillage (20; 20.1') et gagne une position de déverrouillage (20.2; 20.2') où l'épaulement fixe (16) se retrouve libéré et où il est possible d'ouvrir (56) le couvercle (11) à l'aide du moyen de maniement (30),
avec un organe ressort (23; 23') sur le coulisseau (20; 20'), organe qui, lorsque le coulisseau se trouve en position de déverrouillage (20.2; 20.2') et lorsque le couvercle (11) se trouve en position ouverte, saisit par derrière un talon (24; 24') situé dans le boîtier (12; 13),
avec un poussoir (40; 40') agencé entre l'organe ressort (23; 23') et une surface d'appui (19) fixe dans le véhicule, surface contre laquelle le couvercle (11) fermé s'appuie,
le poussoir (40; 40'), lorsque le couvercle (11) se trouve en position fermée, forçant l'organe ressort (23; 23') à reculer
jusqu'à ce que l'organe ressort (23; 23') quitte le talon (24; 24') situé contre le boîtier (12; 13), et que sa force de rappel (15) déplace le coulisseau (20; 20') jusque sur sa position de verrouillage (20.1; 20.1'),
**caractérisé en ce que**,
l'organe ressort se compose d'une languette flexible (23; 23') en assise contre le coulisseau (20; 20').

2. Dispositif de verrouillage (10) selon la revendication 1, **caractérisé en ce que** le poussoir (40) est en assise contre l'organe ressort (23), **en ce qu'**à l'état incorporé, l'extrémité (43) du poussoir pointe contre la surface d'appui (19),
et **en ce que** lorsque le couvercle est ouvert (11), l'extrémité du poussoir (43) fait élastiquement saillie contre la face inférieure du couvercle (11), mais qu'elle fait directement reculer l'organe ressort (23) lorsque le couvercle (11) se trouve en position fermée.

3. Dispositif de verrouillage (10') selon la revendication 1, **caractérisé en ce que** le poussoir (40') est en assise contre un organe ressort antagoniste (60), **en ce qu'**à l'état incorporé l'extrémité (43') du poussoir pointe contre la surface d'appui (19) et qu'il fait élastiquement saillie au niveau de la face inférieure du couvercle (11) lorsque ce dernier (11) se trouve en position ouverte,
**en ce que** l'organe ressort antagoniste (60) est agencé au moins partiellement en dessous de l'organe ressort (23') situé côté coulisseau et **en ce que** le poussoir (40'), lorsque le couvercle (11) se trouve en position fermée, repousse indirectement l'organe ressort (23') par le biais de l'organe ressort antagoniste (60).

4. Dispositif de verrouillage selon la revendication 1, 2 ou 3, **caractérisé en ce qu'**à l'état incorporé le poussoir est en assise contre la surface d'appui fixe, l'extrémité du poussoir pointant contre l'organe ressort ou l'organe ressort antagoniste,
et **en ce que** le poussoir est orienté sur une ouverture située sur la face inférieure du couvercle,
ouverture dans laquelle l'extrémité du poussoir pénètre lorsque le couvercle se trouve en position fermée et percute l'organe ressort ou l'organe ressort antagoniste.

5. Dispositif de verrouillage (10') selon l'une des revendications 3 ou 4, **caractérisé en ce que** l'organe ressort antagoniste situé contre le boîtier (13) est formé d'une languette antagoniste (60) flexible.

6. Dispositif de verrouillage (10; 10') selon l'une des revendications 1 à 5, **caractérisé en ce que** la languette (23; 23') forme une pièce monobloc avec le coulisseau (20; 20') et/ou que la languette antagoniste (60) forme une pièce monobloc avec le carter (13).

7. Dispositif de verrouillage (10) selon l'une des revendications 1 à 6, **caractérisé en ce que** les moyens de commande du verrou (20) se composent d'un épaulement (49) contre le moyen de maniement (30) et d'un épaulement antagoniste (59) contre le verrou (20),
**en ce que** l'épaulement (49) et l'épaulement antagoniste (59) sont éloignés l'un de l'autre au moins dans la position de repos (30.0),
mais qu'ils se percutent au plus tard lorsque se poursuit le pivotement (54) d'une position intermédiaire (30.1) vers une position de travail (30.2),
et transfèrent (21) ce faisant le verrou (20) de la position de verrouillage (20.1) vers la position de déverrouillage (20.2).

8. Dispositif de verrouillage (10) selon la revendication 7, **caractérisé en ce que** le coulisseau (20) et le moyen de maniement (30) présentent le premier une nervure (59) regardant le moyen de maniement (30) et le second un appendice (49) tourné vers le coulisseau (20),
un flanc de la nervure (59) formant l'épaulement et l'extrémité de l'appendice (49) formant l'épaulement antagoniste servant à déplacer (21) le coulisseau (20).
